(19) Europäisches Patentamt
European Patent Office
Office européen des brevets

(11) Publication number: **0 109 207**
**B1**

(12) **EUROPEAN PATENT SPECIFICATION**

(45) Date of publication of patent specification: **13.12.89**

(51) Int. Cl.$^4$: **G 01 T 1/29**

(21) Application number: **83306365.4**

(22) Date of filing: **19.10.83**

# (54) Method for reading out a radiographic image.

(30) Priority: **20.10.82 JP 185086/82**

(43) Date of publication of application:
**23.05.84 Bulletin 84/21**

(45) Publication of the grant of the patent:
**13.12.89 Bulletin 89/50**

(84) Designated Contracting States:
**DE FR GB**

(56) References cited:
**EP-A-0 007 105**
**EP-A-0 079 606**
**US-A-4 346 295**

**PHYSICS LETTERS, vol. 36A, no. 3, 30th August 1971, pages 169-170, Amsterdam, NL**

(73) Proprietor: **KONISHIROKU PHOTO INDUSTRY CO. LTD.**
**No. 26-2, Nishishinjuku 1-chome Shinjuku-ku**
**Tokyo 160 (JP)**

(72) Inventor: **Teshima, Manami**
**1-16-6 Naka**
**Kunitachi-shi Tokyo (JP)**
Inventor: **Tsuchino, Hisanori**
**2-5-19 Owada-cho**
**Hachioji-shi Tokyo (JP)**
Inventor: **Takeuchi, Hiroshi**
**2-10-508 Tategaoka-Danchi 1097, Tate-machi**
**Hachioji-shi Tokyo (JP)**
Inventor: **Shimada, Fumio**
**3-5-20 Kawasaki Hamura-machi**
**Nishitama-gun Tokyo (JP)**

(74) Representative: **Ellis-Jones, Patrick George Armine et al**
**J.A. KEMP & CO. 14 South Square Gray's Inn**
**London WC1R 5EU (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 109 207 B1

## Description

This invention relates to a readout in a radiographic image system. More particularly, it relates to a readout in those radiographic image systems where a radiographic image is recorded on a stimulable phosphor (hereinafter simply called a "phosphor") then read out, reproduced and at last recorded on a recording medium as a final image.

Up to now, to obtain radiographic images, so-called radiography has been employed which utilizes silver halides. However, recently, for fear of running out of silver resources in the world, it becomes desirable not to use silver halides in picturizing a radiographic image.

A substitute method has been developed for the above mentioned radiography where a phosphor accumulating a radiation energy which is passed through an object is stimulated with an energy to emit the stored radiation energy as phosphorescence which is detected and picturized to make an image. Thus, for example GB—A—1,462,769 and Japanese Patent Publication Open to Public Inspection JP—A—29889/1976 propose to convert a radiographic image employing a thermal phosphor as the above-mentioned phosphor, using thermal energy as the stimulating energy. This image conversion method employs a panel made by providing a support with thermal phosphor to absorb radiation passing through an object thereby accumulating the radiation energy corresponding to the above-mentioned radiation in density, and thereafter, by heating the thermal phosphor layer, this accumulated energy is converted into an optical signal whose amplitude gives an image.

Another method for converting a radiographic image is proposed in US—A—3,859,527 and JP—A—12144/1970, which employs electromagnetic radiation selection from among visible rays and infrared rays as the stimulation energy.

Relating to this method, an improvement of total S/N ratio is proposed in JP—A—12492/1970 where a stimulating light having a wavelength from 600 to 700 nm is applied and a stimulated emission having 300 to 500 nm wavelength is selectively detected through a photodetector. Because this method requires no heating, the panel in this method is not required to be heat-resistive, and this method is a preferred one from this point of view. EP—A—0007105 also describes a method in which the stimulating laser beam has a wavelength from 600—700 nm and the stimulated emissions in the range from 300 to 500 nm are selectively detectd by a photodetector.

However, in this method the stimulating energy is insufficient even when a He-Ne laser is applied, and high-speed scanning of the panel is difficult with the stimulating rays. Moreover, the radiation dose to the object is not sufficiently reduced. On the other hand, because the band gap of the trap which can be stimulated by the rays of 600 to 700 nm wavelength rays is relatively small, a fading phenomenon cannot be ignored and the radiation energy information can scarcely be preserved over a long period. Furthermore, with the stimulating rays of this wavelength range, the stimulated emission time fairly lags behind that of the stimulating rays, both on increase and on decrease. This is another factor which retards high-speed scanning of the panel with the stimulating rays.

It is an object of the invention to solve the above-mentioned problems, to thereby provide a practical method for reading out a radiographic image which enables high-speed scanning with the stimulating rays, corresponding high-speed readout, and less decay of the image recorded in a phoshor.

We have found that such an object can be achieved in a method for reading out a radiation image pattern recorded in a stimulable phosphor, charcterized in that the stimulable phosphor is scanned with an $Ar^+$ laser beam having a stimulating wavelength of about 514.5 nm and a spot diameter not exceeding 300 nm, and stimulated emissions of 300 to 500 nm therefrom are detected by a photodector.

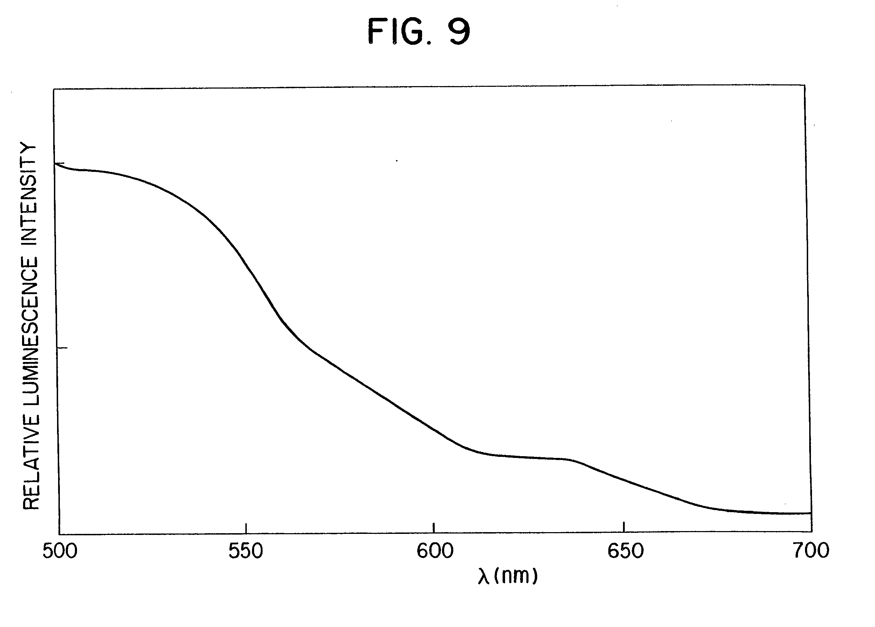

Fig. 1 is a graph indicating the relation between stimulating lase power and intensity of stimulated emission. Fig. 2 is a graph indicating fading rates. Fig. 3 is a graph indicating the response of a phosphor. Fig. 4 is a characteristic chart indicating a spectrum distribution of a transmittance of a filter for stimulating ray. Fig. 5 is a flow chart of a radiographic processing in the invention. Fig. 6 is a sectional view of a stimulable phosphor panel. Fig. 7 is a side view of a readout equipment. Fig. 8 is a graph indicating the stimulated emission spectrum of BaFBr:Eu. Fig. 9 is a graph indicating the stimulation spectrum of BaFBr:Eu.

In this invention, the term, "phosphor", means a stimulable phosphor that emits rays corresponding to the dose of previous irradiation by an optical, thermal, mechanical, chemical, electric or other stimulation, and where irradiation is performed with visible rays, ultraviolet rays and infrared rays, and the term, "radiation", includes X-rays, gamma-rays, beta-rays, alpha-rays and neutron rays.

One practical use of this invention is high-speed reproduction of the actual image from a radiographic image recorded in a phosphor. Fig. 1 shows a typical relationship between the power of stimulating rays and the intensity of stimulated emission. From this figure, it can be seen that this relation is approximately proportional. That is, using such a stimulable phosphor, the strong the stimulating laser beam, the more intense the emitted rays. For example, when a laser beam, of a given magnitude requires 10 µs to scan one picture element or area in readout of a radiographic image on the panel, a laser beam of double magnitude enables one to scan the area in 5 µs, i.e., doubles the readout speed, thereby the time requires to obtain an actual image from a latent image reduces to a half.

An $Ar^+$ laser has about 4 W maximum output power which is fairly large compared to that of a He-Ne laser (about 50 mW). Actually, when we employed an $Ar^+$ laser of 200 mW, for instance, as the stimulating ray source, the intensity of the stimulated emission was about 25 times that when employing a 20 mW He-Ne laser.

Thus, since an $Ar^+$ laser has a fairly large maximum power compared to a He-Ne laser, it can produce extremely intense stimulated emission out of the panel. As described above, this enables high-speed scanning on the panel.

Moreover, according to the proportional relationship between the stimulating-ray power and the stimulated-emission intensity, we can reduce the radiation dose (which affects the human body as the object) by raising the stimulating laser power. This is of great help in preventing radiation diseases in the human body.

On the other hand, where we employ the same panel repeatedly, if the stimulating rays are not intense enough to emit the stored radiation energy as phosphorescence, or if the wavelength of the stimulating rays is inappropriate the radiation energy may not vanish completely out of the panel and a part of it may remain. This remaining radiation energy affects the subsequent readout of the radiographic image as noises, thereby causing a deterioration in the quality of the resulting image. Generally, the remaining radiation energy in the panel must be removed by irradiating with rays having similar wavelength to the stimulating rays, previous to the radiation process. However, employing stimulating rays having large power such as $Ar^+$ laser beam, the radiation energy in the panel can vanish even if the same panel is used repeatedly, so that the resulting image keeps good quality without applying the stimulating rays additionally before the irradiation.

Fig. 2 shows that the decay of the stored energy in the phosphor depends on the traps a stimulating ray can stimulate. Specifically, this figure shows the relative intensity of the rays emitted from several panels which are simultaneously irradiated with X-rays and individually stimulated with the rays having specified wavelength after being left in the dark each for a different period, where the criterion of intensity is the value of phosphorescent intensity from the panel stimulated immediately after the described irradiation. Referring to this figure, $Ar^+$ laser beams of 514.5 nm wavelength as a sitmulating ray cause less decay of the intensity of stimulated emission than rays of 600 to 800 nm wavelength do. Moreover, with $Ar^+$ laser beams, little decay is shown especially in the region where the interval between the irradiation and the stimulation is more than 2 hours. Accordingly, the use of an $Ar^+$ laser as the stimulating-ray source improves the fading phenomenon so that a record on the phosphor can be preserved over a long term.

Further, a reduction in this energy decay means that an $Ar^+$ laser beam can stimulate even such a trap as is hardly stimulated by a ray of a relatively longer wavelength such as a He-Ne laser beam, because the $Ar^+$ laser beam is shorter in wavelength and higher in energy level than He-Ne laser beams are. Accordingly, when stimulation is made by an $Ar^+$ laser beam, the total emission and the sensitivity are increased more and higher, respectively, than occurs when using a ray of a relatively longer wavelength such as a He-Ne laser beam. As a result, the X-ray dose to the human body can be reduced.

Fig. 3 shows responses of the stimulated emissions where the intensity of the stimulating rays takes a rectangular waveform shown as a dotted line. Curve A as a solid line represents the intensity of a stimulated emission stimulated by He-Ne laser beams, while curve B represents that from the same phosphor stimulated by $Ar^+$ laser beams. As this graph indicates, when we applied a He-Ne laser beam pulse of 50 µs width to the phosphor, the resulting phosphorescence has a rise-time and fall-time of about 5 to 6 µs. However, applying $Ar^+$ laser beams as the stimulating ray, these are reduced to about one µs; thus, the improvement in the response is obvious. Thus, for example, $Ar^+$ laser beams having 100 µm spot diameter can scan the panel at a scanning rate of not longer than 5 µs per picture element, which He-Ne laser beams can hardly achieve.

For the separation of a stimulated emission from a reflected stimulating ray, we set the wavelength of the stimulated emission and that of the stimulating rays separately, the former to be shorter and the latter to be longer, and, in front of the photodetector, a filter can be provided which transmits only the stimulated emission, thereby preventing a drop in the S/N ratio.

The wavelength of the stimulated emission can be set in the range from 300 to 500 nm by adopting a phosphor whose emission wavelength or emission peak wavelength is in this range. However, because if the photodetector measures rays out of the range, the S/N ratio will drop considerably, it is necessary to provide a filter which transmits only the rays of this wavelength range, and to use a photodetector which senses rays having a wavelength in this 300 to 500 nm range, at least.

Stimulable phosphors to be used in radiographic image conversion panels of the invention are desirably, from the practical point of view, phosphors whose stimulated emission occur when irradiated by stimulating rays of 500 nm to 800 nm.

Such phopshors are given in the following examples:

Phosphors of formula $BaSO_4$:Ax in which A represents at least one of Dy, Tb and Tm, and $0.001 \leqq x \leqq 1$ mole%, as dislcosed in JP—A—80487/1973;

Phosphors of formula $MgSO_4$:Ax in which A represents at least one of HO and Dy and $0.001 \leqq x < 1$ mole%, as disclosed in JP—A—80488/1973;

Phosphors of formula $SrSO_4$:Ax in which A represents at least one of Tm, Tb and Dy and $0.001 \leqq x \leqq 1$ mole%, as disclosed in JP—A—80489/1973;

Phosphors in which $NaSO_4$, $CaSO_4$, $BaSO_4$ and the like are combined with at least one of Mn, Dy and Tb, as disclosed in JP—A—29889/1976;

Phosphors comprising BeO, Li:$Mg_2SO_4$, $CaF_2$ and the like, as disclosed in JP—A—30487/1977;

Phosphors comprising $Li_2B_4O_7$:CuAg and the like, as disclosed in JP—A—39277/1978;

Phosphors of formula $Li_2O\cdot(B_2O_2)x$:Cu in which x is such that $2<x\leqq3$; and in $Li_2O(B_2O_2)x$:Cu, Ag in which x is such that $2<x\leqq3$; and the like, as disclosed in JP—A—47883/1979;

Phosphors of formula SrS:Ce, Sm, Srs:Eu, Sm, $La_2O_2S$:Eu, Sm, and (Zn, Cd) S:Mn, X in which X represents a halogen, as disclosed in US—A—3,859,527;

Phosphors comprising ZnS:Cu, $P_6$, as disclosed in JP—A—12142/1980;

Barium aluminate phosphors formularized in $BaO\cdot xAl_2O_3$:Eu in which x is such that $0.8\leqq x\leqq10$;

Alkaline earth metal silicate phosphors of formula $M^{II}$ $O\cdot xSiO_2$:A in which $M^{II}$ represents Mg, Ca, Sr, Zm, Cd or Ba; A represents at least one of Ce, Tb, Eu, Tm, Pb, Tl, Bi and Mn; and $0.5\leqq x\leqq2.5$;

Alkaline earth metal fluorohalide phosphors of formula $(Ba_{1-x-y}Mg_xCa_y)FX:eEu^{2+}$ in which X represents at least one of Br and Cl; x, y and e respectively satisfy the conditions of the formulas, $0<x+y\leqq0.6$, $xy\neq0$ and $10^{-6}\leqq e\leqq5\times10^{-2}$, as disclosed in JP—A—12143/1980;

Phosphors of formula LnOX : xA in which Ln represents at least one of La, Y, Gd and Lu; X represents Cl and/or Br; A represents Ce and/or Tb; and x represents a numeral such that $0<x<0.1$, as disclosed in JP—A—12144/1980;

Phosphors of formula $(Ba_{1-x}M^{II}x)$ FX:yA in which $M^{II}$ represents at least one of Ma, Ca, Sr, Zn and Cd; X represents at least one of Cl, Br and I; A represents at least one of Eu, Tb, Ce, Tm, Dy, Pr, Ho, Nd, Yb and Er; x and y represent respectively a numeral satisfying the conditions $0\leqq x\leqq0.6$ and $0\leqq y\leqq0.2$; as disclosed in JP—A—12145/1980.

Phosphors of formula BaFX:xCe, yA in which X represents at least one of Cl, Br and I; A represents at least one of In, Tl, Gd, Sm and Zr; and, x and y are such that $0<x\leqq2\times10^{-1}$ and, $0<y\leqq5\times10^{-2}$, respectively; as disclosed in JP—A—84389/1980;

Rare earth elements activated divalent metal fluorohalide phosphors of formula $M^{II}$FX xA:yLn in which $M^{II}$ represents at least one of Ba, Ca, Sr, Mg, Zn and Cd; A represents at least one of BeO, MgO, CaO, SrO, BaO, ZnO, $Al_2O_3$, $Y_2O_3$, $La_2O_3$, $In_2O_3$, $SiO_2$, $TiO_2$, $ZrO_2$, $GeO_2$, $SnO_2$, $Nb_2O_5$, $Ta_2O_5$ and $ThO_2$; Ln represnts at least one of Eu, Tb, Ce, Tm, Dy, Pr, HO, Nd, Yb, Er, Sm and Gd; X represents at least one of Cl, Br and I; x and y are numerals such that $5\times10^{-5}\leqq x\leqq0.5$ and $0<y\leqq0.2$; as disclosed in JP—A—160078/1980;

Phosphors of formula ZnS:A, Cds:A, (Zn,Cd)S:A, Zns:A,X and CdS:A,X in which A represents Cu, Ag, Au or Mn; and X is a halogen;

Phosphors of formula

Formula (I) $xM_2(PO_4)_2\cdot NX_2$:yA, or

Formula [II] $M_3(PO_4)_2$:yA

in which M and N respectively represent at least one of Mg, Ca, Sr, Ba, Zn and Cd; X represnets at least one of F, Cl, Br and I; A represents at least one of Eu, Tb, Ce, Tm, Dy, Pr, He, Nd, Yb, Er, Sb, Tl, Mn and Sn; and, x and y are numerals such that $0<x\leqq6$ and $0\leqq y\leqq1$; as disclosed in JP—A—148285/1982; and

Phosphors of formula

Formula [III] $nReX_3\cdot mAX_2'$:xEu, or

Formula [IV] $nReX_3\cdot mAX_2'$:zEu·ySm

in which Re represents at least one of La, Gd, Y and Lu; A represents at least one alkaline earth metal which is Ba, Sr and Ca; X and X' represent at least one of F, Cl and Br, respectively; x and y are numerals satisfying the conditions $1\times10^{-4}<x<3\times10^{-1}$ and $1\times10^{-4}<y<1\times10^{-1}$, respectively; and n/m satisfies $1\times10^{-3}<n/m<7\times10^{-1}$.

It is however, to be understood that phosphors to be used in the invention are not limited to the above-mentioned phosphors.

Fig. 4 is a spectrum distribution of transmittance of the previously mentioned filter, such as BG—3 (mfd. by Spectrofilm Co.). Because this filter hardly transmits the stimulating ray of 514.5 nm, it can discriminate the stimulated emission from the stimulating ray. Thus, this filter removes the stimulating ray from the stimulated emission so as to eliminate noises in the readout process, and the S/N ratio remains as high as in the case using stimulating rays having the wavelength of no shorter than 600 nm.

The invention will now be described in more detail with reference to the accompanying drawings.

Fig. 5 is a schematic diagram of processes for reproducing recording a radiographic image. X-rays emitted from a radiation source such as an X-ray tube irradiated on a human body, enter a panel to form an image-like pattern thereon, so that the panel stores energy of the radiation (X-rays) to a trap level of the phosphor therein (radiographic image taking).

Then the scanning of the panel is carried out with $Ar^+$ laser beam spot of 514.5 nm to stimulate the stored image-like radiation energy in the trap, thereby stimulating emissions of from 300 to 500 nm to occur. This stimulated emission is detected and measured by a photodetector, such as a photoelectron-multiplier tube or a photodiode, which can detect rays of this wavelength range selectively (radiographic image readout).

Subsequently, the output signal of the above-mentioned photodetector is amplified, filtered and level-converted, the filtering resulting in noise rejection and cuts off signals beyond the specified bandwidth to obtain the specified resolution.

Various methods can be employed for reducing noise level, such as integrating the output signal for each picture element or area, or applying the logarithmic transformation to the output signal to contract its amplitude range.

The level conversion can be performed on the output signal thus amplified to obtain fine contrast, or to improve sharpness of the picture for observation (image processing).

After processed as described, the output (electric) signal of the photodetector thus processed can be sent to photoscanning equipment such as a cathode-ray tube for radiographic image reproduction. Moreover, this reproduced image can be recorded on a suitable recording medium (radiographic image recording).

A typical structure of a panel which can be employed in this invention is exemplified in Fig. 6, wherein the numeral 10 indicates the panel, 11 is a support and 12 is a phosphor layer laid on the support 11. Panel 10 is usually 10″ × 12″ or 14″ × 17″ in size.

The support can be a sheet of plastics such as polyethylene, a sheet of metal such as aluminium, or a glass plate, for example, whose thickness may determined from a practical point of view. Eitheyr a transparent or an opaque support can freely be used in selecting a suitable position for measuring the phosphorescence.

The phosphor to be coated may be selected from among the previously mentioned phosphors having a stimulated emission of 300—500 nm wavelength; the selected material is laid in a layer, say, 50—1000 µm thick together with a binder.

Fig. 7 illustrates a typical radiographic image readout equipment, wherein the stimulating-ray source is an $Ar^+$ laser (514.5 nm).

The stimulating rays of 514.5 nm wavelength emitted from $Ar^+$ laser 14 pass through a half mirror 15 to enter the panel 10. These stimulating rays scan phosphor layer 12 as a flying spot; the spot diameter is generally 50—300 µm because it is difficult using existing technology to narrow the spot diameter down to below 50 µm, and because a diameter greater than 300 µm may result in a deterioration in the resolution.

Stimulated by the above mentioned stimulating rays, the phosphor emits the image-like stored radiation energy as phosphorescence of 300—500 nm wavelength. This phosphorescence is reflected by half mirror 15, cutting off mixed or stray rays having a wavelength outside the range 300—500 nm by a filter 17; it then enters a photo-detector to be detected and measured.

Because the phosphor layer 12 reflects a part of the stimulating rays which is fairly strong compared to the stimulated emission, it is particularly important to remove this reflected light completely so that the S/N ratio may remain high enough. In this invention, this can be achieved completely by adopting a suitable phosphor such as described above to separate the wavelength spectrum of the stimulated emission from that of the stimulating rays so that they do not overlap, and by employing a filter having the above-mentioned transmittance wavelength range.

As described so far, employing an $Ar^+$ laser of 514.5 nm as the stimulating-ray source brings about the following effects:

(1) The readout speed is improved because $Ar^+$ laser beams have large power enough to enable high-speed scanning of the panel.

(2) The radiation dose irradiated can be reduced since $Ar^+$ laer beams have large power.

(3) The fading phenomenon of the energy accumulated in the phosphor is not so serious, so that the image recorded on the panel can be read out with high stimulated emissions intensity for a long term.

(4) Because an $Ar^+$ laer (514.5 nm) emits visible rays, conventional optical elements for visible rays may be used and the adjustment of the equipment is easy.

Making efficient use of the above-mentioned effects, the objects of this invention can be completely attained. The following Example and control Example further illustrate this invention.

Example 1

A panel was made in the following manner: 8 parts by weight of a phosphor comprising BaFBr:Eu were dispersed in 1 part by weight of polyvinyl butyral as a binder by using a solvent prepared by mixing the same quantities of acetone and ethyl acetate, and the resulting dispersion was coated over a polyethylene terephthalate substrate by means of a wire-bar. Dry thickness of the phosphor layer of the panel was about 300 µm.

After irradiating this panel with X rays of 80 KVP tube voltage, the stimulated emission was measured, using the equipment illustrated respectively in Fig. 5, 6, 7. To perform this, using 10 mW $Ar^+$ laser beams (514.5 nm) as the stimulating rays, the phosphor was stimulated for 4 µs. Fig. 8 indicates the stimulated emission spectrum obtained and clearly shows that this emission spectrum of the above-mentioned phosphor displayed a peak in the vicinity of 390 nm. Accordingly, the stimulated emission and the stimulating rays were easily separated by using a stimulating-ray cut off filter having a transmittance spectrum of Fig. 4 provided before a photo electron multiplier tube, so that the stimulated emission was detectable in a high S/N ratio.

Moreover, we obtained a fine image by scanning the above-mentioned panel (40 × 40 cm) with the 10 MW $Ar^+$ laer beams in about 20 s.

Furthermore, Fig. 9 indicates the relation between wavelength of stimulating rays and intensity of stimulated emission, which was measured by applying light energy of various wavelengths after simularly irradiating X rays of 80 KVP tube-voltage to the phosphor. When the phosphor has a peak in its stimulation spectrum in the vicinity of 500 nm, it is particularly effective in the view of the stimulation efficiency of employing $Ar^+$ laser beams of 514.5 nm as the stimulating rays.

Control Example 1

After irradiating the same panel as in Example 1 with X rays of 80 KVP tube-voltage, the phosphor was stimulated for 4 µs with 5 mW He-Ne laser beams (632.8 nm); then the stimulated emission was measured providing the previously mentioned filter before the photo electron multiplier tube to cut off the stimulating rays. The intensity of the stimulated emission was about 1/5 of that in Example 1.

Moreover, to scan the above mentioned 40 × 40 cm panel with the 5 mW He-Ne laser beam (632.8 nm), about 1 min. was required to obtain an image having similar quality to that of Example 1.

**Claims**

1. A method for reading out a radiation image pattern recorded in a stimulatable phosphor, characterised in that the stimulable phosphor is scanned with an $Ar^+$ laser beam having a stimulating wavelength of about 514.5 nm and a spot diameter not exceeding 300 µm, and stimulated emissions of 300 to 500 nm therefrom are detected by a photodetctor.

2. A method according to claim 1, wherein the radiation pattern is recorded in a panel comprising a support and a phosphor layer comprising the stimulable phosphor and a binder.

3. A method according to claim 2, wherein the support is a synthetic resin sheet, a metal plate or a glass plate.

4. A method according to any one of claims 1 to 3, wherein the stimulating ray emitted by the $Ar^+$ laser has a spot diameter of 50 to 300 µm and the surface of said phosphor layer is scanned therewith.

5. A method according to any one of claims 1 to 4, wherein said photodetector is sensitive at least to emissions having a wavelength of from 300 to 500 nm.

6. A method according to any one of claims 1 to 5, wherein said photodetector is a photomultiplier or a photodiode.

7. A method according to any one of claims 1 to 6, wherein an optical filter is provided in front of said photodetector, so as to transmit only rays within the wavelength range of the stimulated emission.

**Patentansprüche**

1. Verfahren zum Ablesen eines in einem stimulierbaren Leuchtstoff aufgezeichneten Strahlungsbildmusters, dadurch gekennzeichnet, daß man den stimulierbaren Leuchtstoff mit einem $Ar^+$-Laserstrahl mit einer stimulierenden Wellenlänge von etwa 514.5 nm und einem Fleckdurchmesser von nicht über 300 µm abtastet und die daraus stimulierten Emissionen von 300 bis 500 nm mittels eines Photodetektors bestimmt.

2. Verfahren nach Anspruch 2, dadurch gekennzeichnet, daß man das Strahlungsmuster auf einer Tafel aus einem Schichtträger und einer den stimulierbaren Leuchtstoff und ein Bindemittel enthaltenden Leuchtstoffschicht aufzeichnet.

3. Verfahren nach Anspruch 2, dadurch gekennzeichnet, daß man als Träger eine Kunstharzfolie, ein Metallblech oder eine Glasplatte verwendet.

4. Verfahren nach einem der Ansprüche 1 bis 3, dadurch gekennzeichnet, daß der durch den $Ar^+$-Laser emittierte stimulierende Strahl einen Fleckdurchmesser von 50 bis 300 µm aufweist und daß die Oberfläche der Leuchtstoffschicht damit abgetastet wird.

5. Verfahren nach einem der Ansprüche 1 bis 4, dadurch gekennzeichnet, daß der Photodetektor zumindest gegenüber Emissionen einer Wellenlänge von 300 bis 500 nm empfindlich ist.

6. Verfahren nach einem der Ansprüche 1 bis 5, dadurch gekennzeichnet, daß es sich bei dem Photodetektor um einen Photoelektronenvervielfacher oder eine Photodiode handelt.

7. Verfahren nach einem der Ansprüche 1 bis 6, dadurch gekennzeichnet, daß vor dem Photodetektor ein optisches Filter vorgesehen ist, um lediglich Strahlen innerhalb des Wellenlängenbereichs der stimulierten Emission durchzulassen.

**Revendications**

1. Procédé de restitution d'une diagramme de rayonnement enregistré dans un luminophore stimulable, caractérisé en ce que le luminophor stimulable est exploré à l'aide d'un faisceau laser $Ar^+$ possédant une longueur d'onde de stimulation d'environ 514,5 nm et un diamètre de spot n'excédant pas 300 µm, et des émission stimulées de 300 à 500 nm provenant de celui-ci sont détectées par un photodétecteur.

2. Procédé selon la revendication 1, dans lequel le diagramme de rayonnement est enregistré dans un panneau comportant un support et une couche luminophore comprenant le luminophore stimulable et un liant.

3. Procédé selon la revendication 2, dans lequel le support est une feuille de résine synthétique, une plaque de métal ou une plaque de verre.

4. Procédé selon l'une quelconque des revendications 1 à 3, dans lequel le rayon de stimulation émis par le laser $Ar^+$ possède un diamètre de spot de 50 à 300 µm et la surface de ladite couche luminophore est explorée par celui-ci.

5. Procédé selon l'une quelconque des revendications 1 à 4, dans lequel ledit photodétecteur est sensible au moins à des émissions ayant une longueur d'onde de 300 à 500 nm.

6. Procédé selon l'une quelconque des revendications 1 à 5, dans lequel ledit photodétecteur est un photomultiplicateur ou une photodiode.

7. Procédé selon l'une quelconque des revendications 1 à 6, dans lequel un filtre optique est prévu devant ledit photodétecteur, de manière à n'émettre que des rayons à l'intérieur de la plage de longueurs d'onde de l'émission stimulée.

FIG. 1

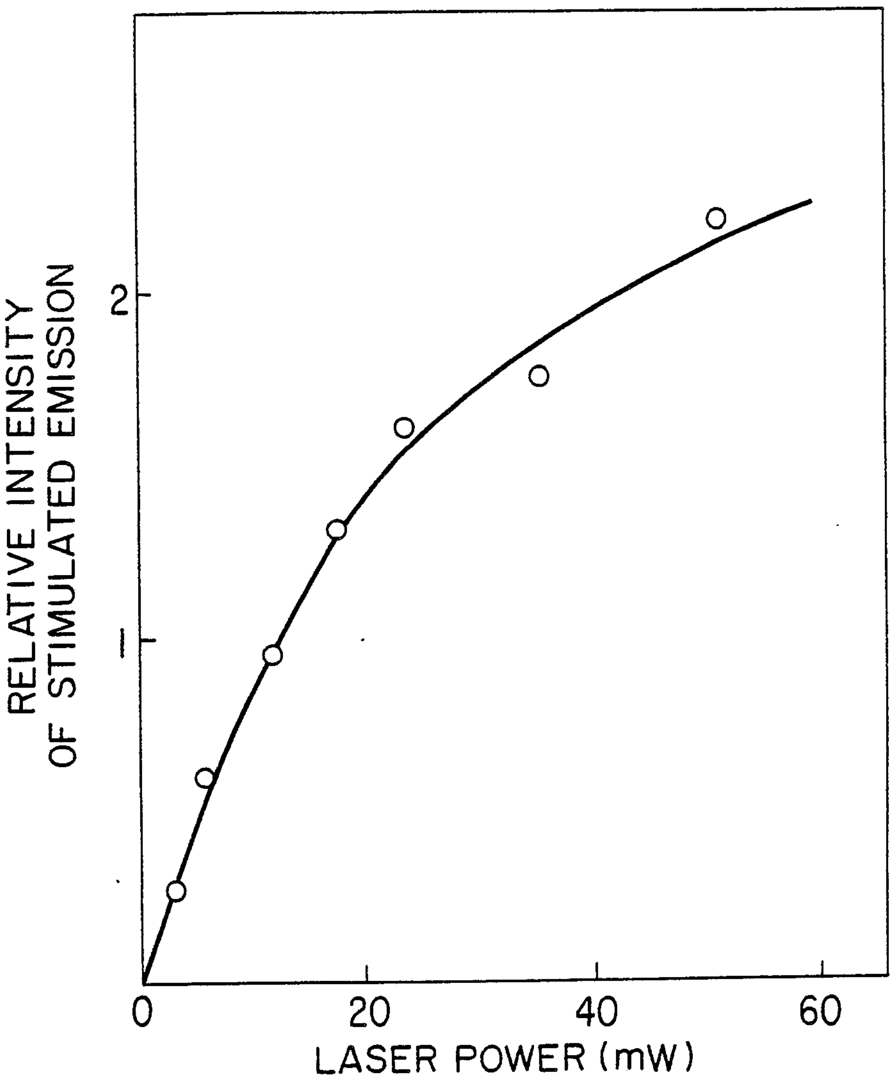
RELATIVE INTENSITY
OF STIMULATED EMISSION
2
1
0
20
40
60
LASER POWER (mW)

FIG. 2

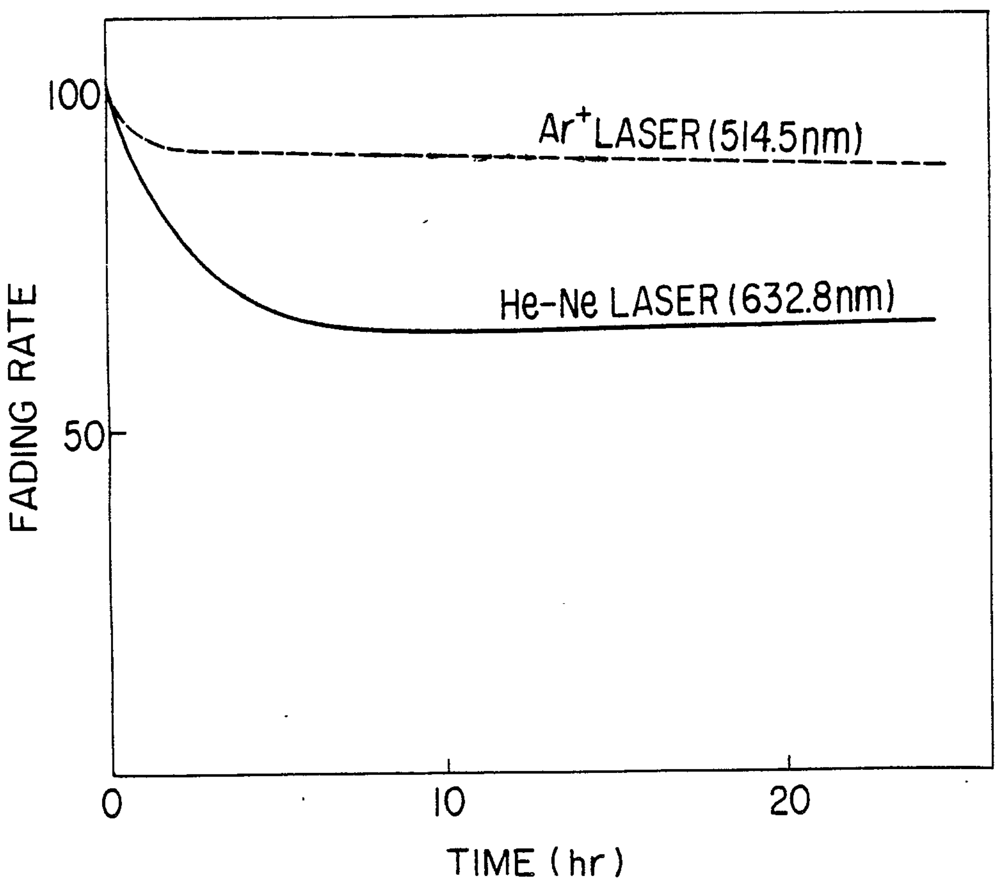
100
50
FADING RATE
Ar⁺LASER (514.5nm)
He-Ne LASER (632.8nm)
0
10
20
TIME (hr)

FIG. 3

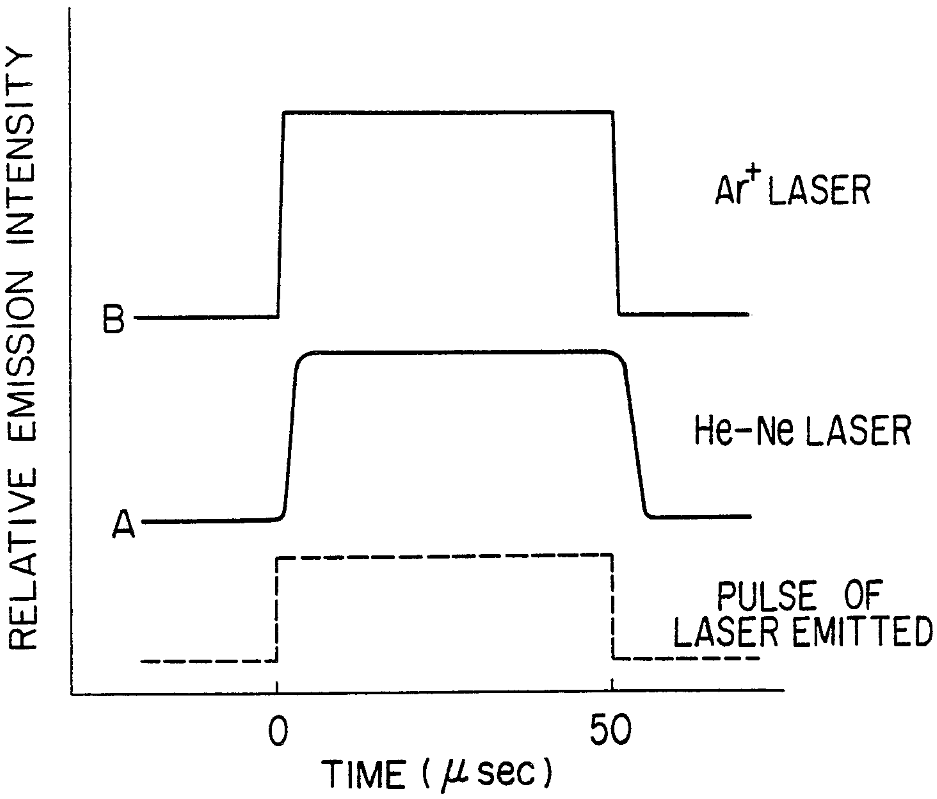
RELATIVE EMISSION INTENSITY
B
A
Ar+ LASER
He-Ne LASER
PULSE OF
LASER EMITTED
0
50
TIME (μsec)

FIG. 8

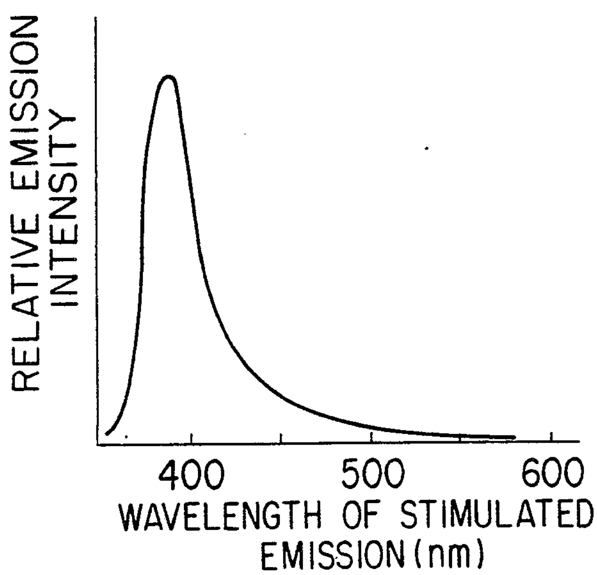
RELATIVE EMISSION
INTENSITY
400
500
600
WAVELENGTH OF STIMULATED
EMISSION (nm)

FIG. 4

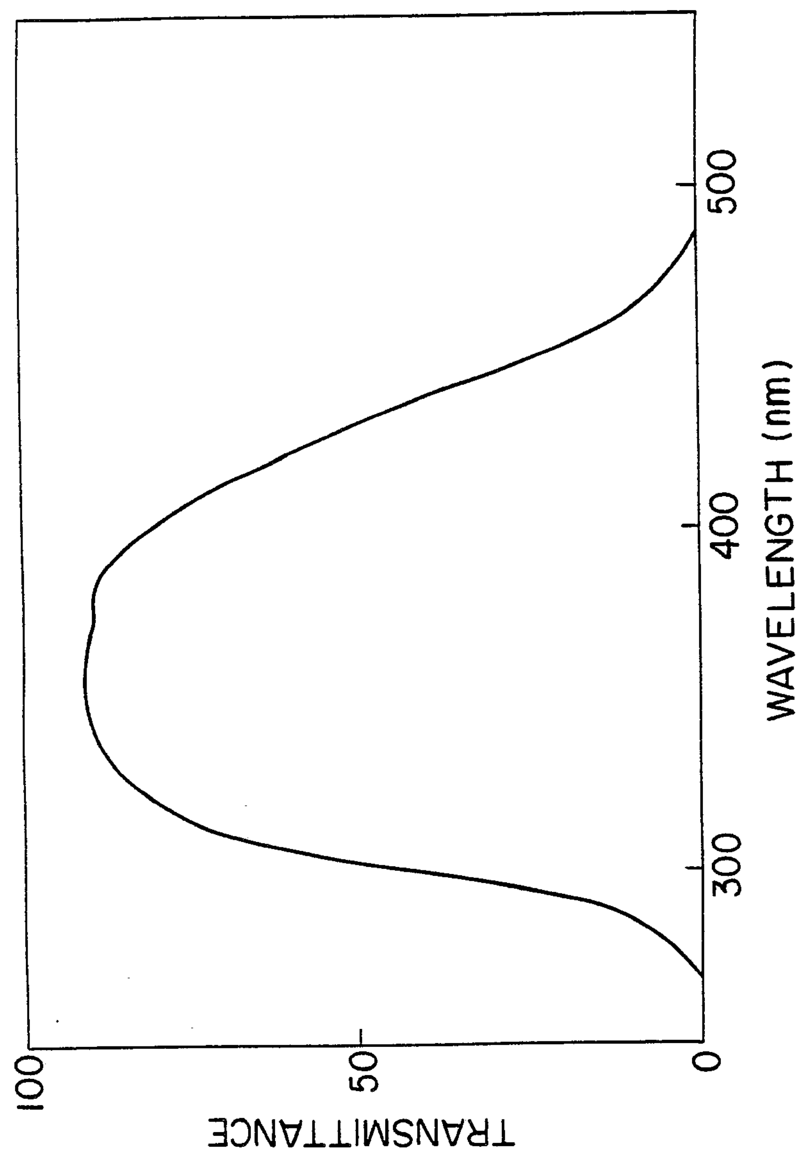

FIG. 5

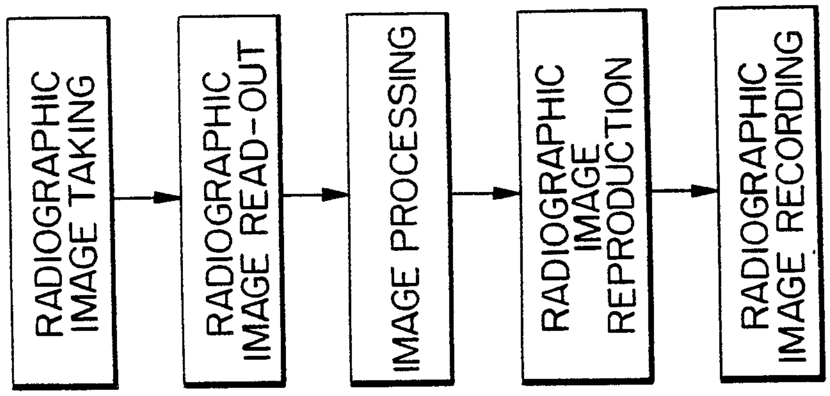


FIG. 6

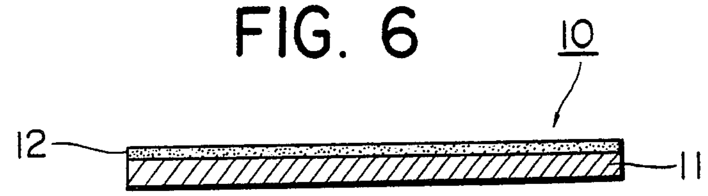


FIG. 7

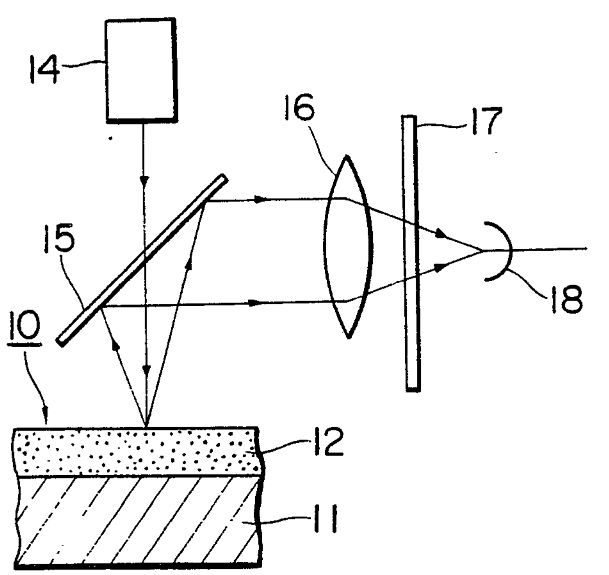

FIG. 9